(19) Europäisches Patentamt / European Patent Office / Office européen des brevets

(11) **EP 4 038 559 B1**

(12) **EUROPEAN PATENT SPECIFICATION**

(45) Date of publication and mention
of the grant of the patent:
**30.10.2024 Bulletin 2024/44**

(21) Application number: **20871061.6**

(22) Date of filing: **23.09.2020**

(51) International Patent Classification (IPC):
***G06Q 10/06*** (2023.01)

(52) Cooperative Patent Classification (CPC):
**G06Q 10/06; G05B 19/41865; G06Q 10/0631;
G06Q 50/04;** G05B 2219/32017

(86) International application number:
**PCT/JP2020/035878**

(87) International publication number:
**WO 2021/065641 (08.04.2021 Gazette 2021/14)**

(54) **SYSTEM, METHOD AND PROGRAM**

SYSTEM, VERFAHREN UND PROGRAMM

SYSTÈME, PROCÉDÉ ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2019 JP 2019178761**

(43) Date of publication of application:
**10.08.2022 Bulletin 2022/32**

(73) Proprietor: **Yokogawa Electric Corporation
Musashino-shi, Tokyo 180-8750 (JP)**

(72) Inventors:
• **NAITO, Takashi
Musashino-shi, Tokyo 180-8750 (JP)**

• **KENNEDY, Paul
Musashino-shi, Tokyo 180-8750 (JP)**

(74) Representative: **Hoffmann Eitle
Patent- und Rechtsanwälte PartmbB
Arabellastraße 30
81925 München (DE)**

(56) References cited:
JP-A- 2000 254 839    JP-A- 2007 018 284
JP-A- 2007 018 284    JP-A- 2013 109 711
JP-A- H06 139 250     US-A1- 2016 291 584
US-A1- 2019 041 813

## Description

## Technical Field

The present invention relates to a system, a method, and a program.

## RELATED ART

Petroleum refinement is known for refining crude oil to produce multiple petroleum products, as shown in Non-Patent Document 1, for example. Conventionally, when operating a relatively large-scale production site, such as a refinery where such petroleum refinement is performed, enterprise resource planning, manufacturing execution, process control, and the like are each performed independently using a system in which different groups (or departments) in an origination are independent from each other.

US2019041813A1 discloses that a refinery or petrochemical plant may include a fractionation column and related equipment, such as one or more condensers, receivers, reboilers, feed exchangers, and pumps. The equipment may have boundaries or thresholds of operating parameters based on existing limits and/or operating conditions. Illustrative existing limits may include mechanical pressures, temperature limits, hydraulic pressure limits, and operating lives of various components. There may also be relationships between operational parameters related to particular processes. For example, the boundaries on a naphtha reforming reactor inlet temperature may be dependent on a regenerator capacity and hydrogen-to-hydrocarbon ratio, which in turn may be dependent on a recycle compressor capacity. Operational parameters of a final product may be determined based on actual current or historical operation, and implemented in one or more models to determine adjustments for enhanced operational efficiency.

JP2007018284A discloses that a plant system controller 310 recognizes the qualities of crude oil and naphtha oil fractions with the use of a 51-pure component and a 39-pseudo component to be classified based on the distillation calculation of the crude oil, based on a crude oil database and a naphtha database from raw material data of operating condition data which is set and inputted by a worker. The quality and amount of the petroleum product to be manufactured by way of different kinds of processing in each device of a plant system manufacturing apparatus 200 with the crude oil and the naphtha oil fractions as the raw material are recognized with the 51-pure component. The crude oil, the naphtha oil fractions, and the petroleum product are connected in a vapor-liquid equilibrium state with the 51-pure component and the 39-pseudo component so as to obtain a plant model. Based on the plant model, an operating condition is calculated, by which a profit is maximized and a difference is minimized in each device of the plant system manufacturing apparatus 200. The operation of the plant system manufacturing apparatus 200 is controlled according to actual results.

Non-Patent Document 1: Yokomizo, "Petroleum Refining Technology and Petroleum Supply and Demand Trends - Current Status and Future Prospects -," Japan Petroleum Institute for Natural Gas and Metals; Petroleum, Natural Gas Resources Information, September 20, 2017, Oil and Gas Review Vol. 51 No. 5, p. 1-20

When operating a production site, it is preferable to be aware of the degree to which the production plan is improved as a result of performance improvements being reflected in a model which is used to generate the production plan.

## GENERAL DISCLOSURE

The object is achieved by the subject-matter of the independent claims. Dependent claims provide advantageous embodiments. Examples are provided to facilitate the understanding of the present disclosure. To solve the above problems, according to a first example, provided is a system. The system may comprise a planning section that generates a production plan for controlling a production site during a target interval, using a planning model that has been updated to a newest state. The system may comprise a base planning section that generates a base plan to serve as a base of the production plan, using an unupdated planning model. The system may comprise a tracking section that tracks improvement in the production plan caused by the update of the planning model, based on the production plan and the base plan.

The planning section and the base planning section may respectively generate the production plan and the base plan by each inputting the same information to the respective planning models.

The base planning section may input, to the unupdated planning model, information that is the same as information input to the planning model by the planning section for generating the production plan for the target interval.

The tracking section may track the improvement in the production plan caused by the update of the planning model, based on a difference between the production plan and the base plan.

The tracking section may track profit in the production plan.

The system may further comprise an updating section that updates the planning model.

The system may further comprise a simulating section that simulates operation of at least a portion of the production site, based on a simulation model of the at least a portion of the production site, and a calibrating section that calibrates the simulation model, based on a difference between the simulated operation and actual operation, and the updating section may update the planning model according to the calibration of the simulation model.

The planning model may be a linear programming model.

The system may further comprise a control section that controls the production site, based on the production plan.

The production site may include a refinery that produces a plurality of petroleum products by refining crude oil.

According to a second example of the present invention, provided is a method. The method may comprise generating a production plan for controlling a production site during a target interval, using a planning model that has been updated to a newest state. The method may comprise generating a base plan to serve as a base of the production plan, using an unupdated planning model. The method may comprise tracking improvement in the production plan caused by the update of the planning model, based on the production plan and the base plan.

According to a third example of the present invention, provided is a program. The program may be executed by a computer. The program may cause the computer to function as a planning section that generates a production plan for controlling a production site during a target interval, using a planning model that has been updated to a newest state. The program may cause the computer to function as a base planning section that generates a base plan to serve as a base of the production plan, using an unupdated planning model. The program may cause the computer to function as a tracking section that tracks improvement in the production plan caused by the update of the planning model, based on the production plan and the base plan.

The summary clause does not necessarily describe all necessary features of the embodiments of the present invention. The present invention may also be a subcombination of the features described above, and is defined in the claims.

**Brief Description of Drawings**

Fig. 1 shows an example of a total solution model 100 of an operation management system that may include the system according to the present embodiment as a portion thereof.

Fig. 2 shows an example of an oil refinement flow at a refinery 120R.

Fig. 3 shows an example of a block diagram of a system 300 according to the present embodiment.

Fig. 4 shows an example of a flow by which the system 300 according to the present embodiment tracks improvements in the production plan.

Fig. 5 shows an example of a block diagram of the system 300 according to a modification of the present embodiment.

Fig. 6 shows an example of a flow by which the system 300 according to this modification of the present embodiment updates the planning model 315.

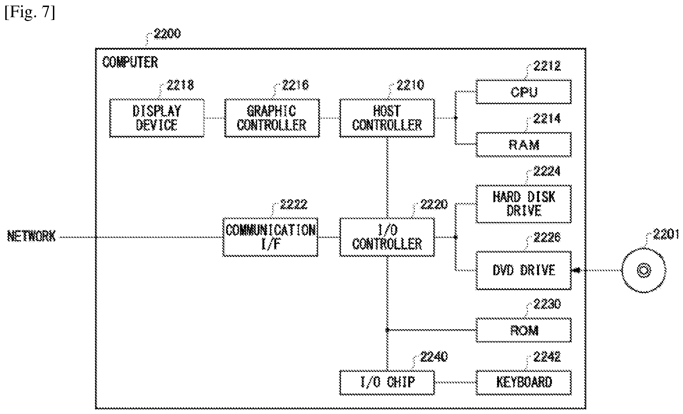

Fig. 7 shows an example of a computer 2200 in which aspects of the present invention may be wholly or partly embodied.

**DESCRIPTION OF EXEMPLARY EMBODIMENTS**

Hereinafter, some embodiments of the present invention will be described. The embodiments do not limit the invention according to the claims, and all the combinations of the features described in the embodiments are not necessarily essential to means provided by aspects of the invention.

A system according to the present embodiment relates to operation of a production site and, as an example, may realize some of the functions of a total solution model that realizes improvement of production efficiency, by organically integrating various functions from an enterprise resource planning (ERP) layer to a manufacturing execution system (MES) layer and a process control system (PCS) layer, and linking management information and control information. As an example, the system according to the present embodiment tracks the degree of improvement in a production plan generated using a planning model that has been updated to a most recent state, with a production plan generated using an unupdated planning model as a base, in a portion of such a total solution model.

In the following description, an example is used in which the system according to the present embodiment is applied to the operation performed in a refinery and a petrochemical site, but the present embodiment is not limited to this. As an example, the system according to the present embodiment may be applied to operation of a production site other than a refinery or petrochemical site, for example.

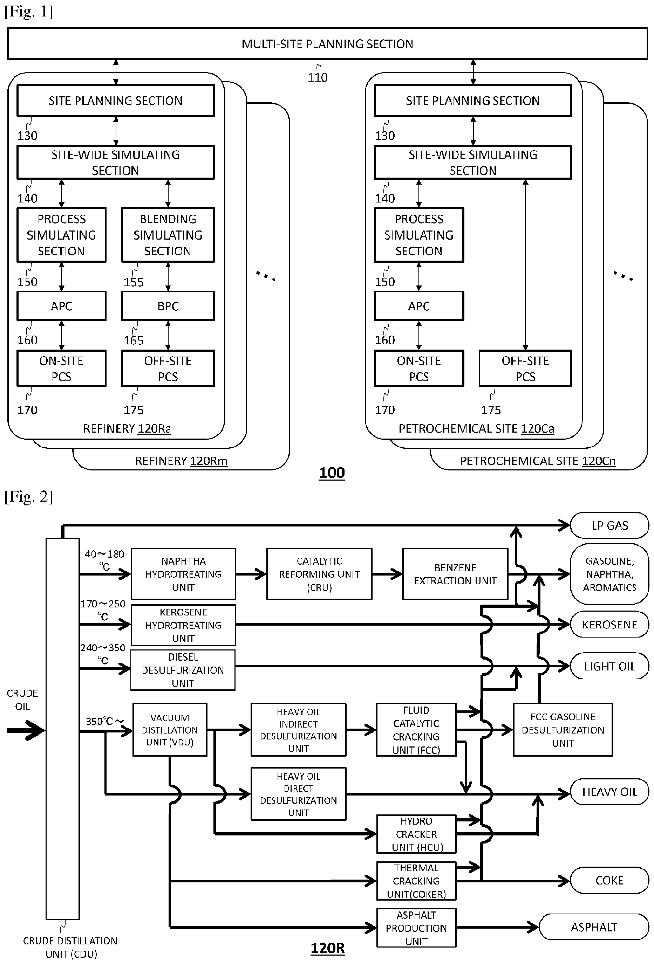

Fig 1 shows an example of a total solution model 100 of an operation management system that may include the system according to the present embodiment as a portion thereof. The total solution model 100 comprehensively manages a plurality of production sites associated with the same organization (run by the same company, run by the same group of companies, or the like). For example, the total solution model 100 may comprehensively manage a plurality of refineries and a plurality of petrochemical sites that are run worldwide by the same group of companies. In the present drawing, the total solution model 100 includes a multi-site planning section 110, m refineries 120Ra to 120Rm (referred to collectively as the "refineries 120R"), and n petrochemical sites 120Ca to 120Cn (referred to collectively as the "petrochemical sites 120C"). If there is no particular reason to make a distinction, the refineries 120R and the petrochemical sites 120C are referred to collectively as production sites 120.

The multi-site planning section 110 comprehensively generates a production plan for each of the plurality of production sites 120 associated with the same organization. As an example, the multi-site planning section 110 comprehensively generates a production plan for each of the refineries 120Ra to 120Rm and the petrochemical sites 120Ca to 120Cm using a linear programming technique. Generally, with a mathematical model for determining work or intent, the problem of finding the value of a variable that gives the largest objective function under certain mathematical conditions is referred to as a mathematical programming problem. In particular, a case where the expression representing the objective function and the expression representing the mathematical conditions are represented by linear equations of variables is referred to as a linear programming problem. The technique for solving this problem is the linear programming technique.

More specifically, the linear programming technique is generally a technique for solving a problem of maximizing (or minimizing) an objective function shown by Math. 2, under constraint conditions shown by Math. 1. Here, x is an $(n \times 1)$ variable matrix in which each element is restricted non-negatively by Math. 1. Furthermore, when i = 1, 2, or 3, $A_i$ is an $(m_i \times n)$ coefficient matrix and $b_i$ is an $(m_i \times 1)$ coefficient matrix. Furthermore, c is an $(n \times 1)$ coefficient matrix. In this way, with the linear programming technique, a plurality of linear expressions are used, and each of the plurality of linear expressions is represented as a linear programming table. Each entry in the linear programming table is a coefficient for a respective one of a plurality of variables. The linear programming technique includes deriving a combination of variable values that maximize (or minimize) the objective function of Math. 2, under the constraint conditions shown by Math. 1, by repeatedly testing different combinations of a plurality of variables using matrix mathematics.

[Math.1]

$$A_1 x \leq b_1,$$
$$A_2 x \geq b_2,$$
$$A_3 x = b_3,$$
$$x \geq 0$$

[Math.2]

$$z = {}^t c x$$

As an example, the multi-site planning section 110 acquires business information including crude oil quantity, crude oil type, crude oil price, product price, product demand, process unit availability, process unit maximum capacity, and the like via a network, various memory devices, user input, or the like. A "process unit" refers to a unit that performs any one of various processes needed to produce a product or semi-finished product from a raw material, or any processes associated with these various processes, at the production site 120. The business information such as described above includes a variable (e.g. crude oil price or the like) determined by a business environment or the like and a variable (e.g. crude oil amount or the like) determined by a business decision or the like, for example. It is difficult to purposefully change a variable determined by the business environment or the like, but a variable determined by a business decision or the like can be freely changed to a certain extent at according to the intent of the management. The multi-site planning section 110 derives a combination of variables that maximize the "gross profit", which is an example of the objective function, by performing a multi-site planning process a plurality of times while changing the values of variables determined by such management decisions or the like. In this case, the multi-site planning section 110 generates, for each of a plurality of production sites 120, a production plan including information such as oil balance (input and output of the production site 120), economic balance (price and income for all input and output of the production site 120), gross profit, operating cost or net profit, energy balance (flow rate and heat quantity of fuel consumed in each process and in all processes in total), a process unit summary (summary of material balance and stream property), a marginal value (value indicating which constraint can realize a greater profit if relaxed), blend summary (summary of a mixture of components including the amount and property of each component), and reports concerning any of the above.

At this time, the multi-site planning section 110 generates, for each production site 120, a production plan for each of one or more relatively long multi-site plan intervals in a relatively long-term multi-site plan period. For example, the multi-site planning section 110 may generate, for each of the plurality of production sites 120, a production plan for each month in a period of the following three months. The multi-site planning section 110 supplies each of the plurality of production sites 120 with the production plans generated respectively for the plurality of production sites 120, via a network, various memory devices, user input, or the like.

The refineries 120R produce a plurality of petroleum products by refining crude oil. The petroleum products of the refineries 120R are described in detail further below. Each refinery 120R includes a site planning section 130, a site-wide simulating section 140, a process simulating section 150, a blending simulating section 155, an APC (Advanced Process Control) 160, a BPC (Blend Property Control) 165, an on-site process control section 170, and an off-site process control section 175. The above describes an example where each refinery 120R is provided with all of these function sections, but the present embodiment is not limited to this. As an example, some of these function sections, e.g. at least one of the site planning section 130, the site-wide simulating section 140, the process simulating section 150, or the blending simulating section 155, may be provided in at a location other than the refinery 120R.

The site planning section 130 generates a production plan for the production site 120 with which it is associated, using the linear programming technique, for example. At this time, the site planning section 130 may use a linear programming table having the same structure as the table used when the multi-site planning section 110 generated the production plan. As an example, the site planning section 130 acquires the production plan for the production site 120 with which the site planning section 130 is associated, from among the production plans generated by the multi-site planning section 110, via a network, various memory devices, user input, or the like. Furthermore, the site planning section 130 acquires business information that is more detailed than the business information used when the multi-site planning section 110 generated the production plan and tailored to the production site 120 with which the site planning section 130 is associated, via a network, various memory devices, user input, or the like. Such detailed business information includes a variable determined by the business environment or the like at site level and a variable determined by a decision or the like made at site level, for example. It is difficult to purposefully change a variable determined by the business environment or the like at site level, but a variable determined by a business decision or the like made at site level can be freely changed to a certain extent at according to the intent at site level. As an example, the site planning section 130 uses a linear programming table with the same structure as the table used by the multi-site planning section 110, to input parameter data that has been determined by the production plan generated by the multi-site planning section 110 and to perform the site planning process a plurality of times while changing the values of the variables determined by a decision or the like made at site level, in order to derive the combination of variable values that maximize the "gross profit", for example. The site planning section 130 then generates the production plan obtained in this case as the more detailed production plan tailored to the production site 120 with which the site planning section 130 is associated.

At this time, the site planning section 130 generates, for the production site 120 with which the site planning section 130 is associated, a production plan for each of one or more relatively short site planning intervals in a relatively short-term site planning period, compared to the site planning period of the production plan generated by the multi-site planning section 110. For example, the site planning section 130 may generate, for the production site 120 with which the site planning section 130 is associated, a production plan for each week in a period of the following one month. The site planning section 130 supplies the production plan that it generated to another function section or apparatus, via a network, various memory devices, user input, or the like.

If a problem would occur (e.g. if gross profit, production volume requirement, product quality specification, and tank storage capacity would drop below a threshold value or physical constraint) in the production plan of the production site 120 with which the site planning section 130 is associated when using the parameters determined by the production plan generated by the multi-site planning section 110, the site planning section 130 may provide feedback about this problem to the multi-site planning section 110 and generate a request to change a business decision made at the multi-site level.

The site planning section 130 may have a function of a scheduler that schedules operations at the production site 120 in units of single days or multiple days, for example, according to the production plan generated by this site planning section 130. The above describes an example in which the site planning section 130 has the function of a scheduler, but the present embodiment is not limited to this. The refinery 120R may include a scheduler as another function section or apparatus differing from the site planning section 130. The scheduler may acquire basic schedule information including tank information, a transport ship schedule, a pipeline delivery schedule, a road or rail schedule, and the like, for example, via a network, various memory devices, user input, or the like. In a case where the scheduler is configured as a function section or apparatus differing from the site planning section 130, the scheduler acquires the production plan generated by the site planning section 130 via a network, various memory devices, user input, or the like. The scheduler then generates daily schedule information at the production site 120, for example, according to the acquired production plan, and supplies this daily schedule information to another function section or apparatus via a network, various memory devices, user input, or the like.

The site-wide simulating section 140 simulates the site-wide operation of the production site 120. That is, the site-wide simulating section 140 simulates the site-wide behavior of responses corresponding to input, output, and processing content at the production site 120. In the present drawing, the site-wide simulating section 140 performs site-wide simulation of the operation of on-site process units and off-site process units. As an example, "on-site" indicates the site where refining equipment is provided at the refinery 120R. Furthermore, "off-site" indicates a site where equipment around a tank yard that is outside where the refining equipment is provided at the refinery 120R, i.e. a site where ancillary equipment for receiving, storing, blending, and shipping crude oil, products, or semi-finished products is provided. The site-wide simulating section 140 acquires site information including information such as supply flow, product flow, temperature, pressure, and lab data concerning supply quality and product quality at the production site 120, via a network, various memory devices, user input, or the like. As an example, the site-wide simulating section 140 inputs the site information to a steady state model, simulates the operation of the production site 120, and outputs site-wide simulation results including information such as production amount, properties, site conditions, and performance at the production site 120. The steady state model is a model that outputs a constant result that does not change over time, in response to input that does not develop or change over time. At this time, the site-wide simulating section 140 may output the site-wide simulation results based at least partially on the schedule information generated by the scheduler. In other words, the site-wide simulating section 140 may output the site-wide simulation results obtained in a case where the production site 120 operates at least partially according to the schedule generated by the scheduler. Instead, the site-wide simulating section 140 may output the site-wide simulation results obtained in a case where the production site 120 operates according to a schedule that is different from the schedule generated by the scheduler. The site-wide simulating section 140 supplies the output site-wide simulation results to another function section or apparatus via a network, various memory devices, user input, or the like.

The process simulating section 150 simulates the operation of each on-site process unit (group). That is, the process simulating section 150 simulates the behavior of reactions corresponding to input, output, and processing content of each on-site process unit (group). As an example, the process simulating section 150 acquires site information that is more detailed and tailored to each on-site process unit (group) compared to the linear programming in the site planning section 130, via a network, various memory devices, user input, or the like. Then, for example, the process simulating section 150 inputs the more detailed site information into the steady state model, simulates the operation of each on-site process unit (group), and outputs more detailed simulation results for each on-site process unit (group). At this time, the process simulating section 150 may output the simulation results of each on-site process unit (group) based at least partially on the schedule information generated by the scheduler. In other words, the process simulating section 150 may output the simulation results of each on-site process unit (group) obtained in a case where each on-site process unit (group) operates at least partially according to the schedule generated by the scheduler. Instead, the process simulating section 150 may output the simulation results of each on-site process unit (group) obtained in a case where each on-site process unit (group) operates according to a schedule different from the schedule generated by the scheduler. The process simulating section 150 supplies the output simulation results of each on-site process unit (group) to another function section or apparatus via a network, various memory devices, user input, or the like.

The blending simulating section 155 simulates the operation of each process unit (group) that is related to blend property control and located off-site. That is, the blending simulating section 155 simulates the behavior of reactions corresponding to input, output, and processing content each off-site process unit (group) related to blend property control. Blend property control refers to control performed to mix together each component at an off-site location and create products that satisfy certain standards with minimum cost and maximum throughput. The blending simulating section 155 acquires site information that is more detailed and tailored to each off-site process unit (group) related to blend property control, compared to the site information used when the site-wide simulating section 140 output the site-wide simulation results, via a network, various memory devices, user input, or the like. Then, for example, the blending simulating section 155 inputs the more detailed site information into the steady state model, simulates the operation of each off-site process unit (group) related to blend property control, and outputs more detailed simulation results for each off-site process unit (group) related to blend property control. At this time, the blending simulating section 155 may output the simulation results of each off-site process unit (group) related to blend property control based at least partially on the schedule information generated by the scheduler. In other words, the blending simulating section 155 may output the simulation results of each off-site process unit (group) related to blend property control obtained in a case where each off-site process unit (group) related to blend property control operates at least partially according to the schedule generated by the scheduler. Instead, the blending simulating section 155 may output the simulation results of each off-site process unit (group) related to blend property control obtained in a case where each off-site process unit (group) related to blend property control operates according to a schedule different from the schedule generated by the scheduler.

The blending simulating section 155 supplies the output simulation results of each off-site process unit (group) related to blend property control to another function section or apparatus via a network, various memory devices, user input, or the like.

The APC 160 is implemented for each process unit (group) that requires advanced control and is located on-site, and performs control at a higher level than the on-site process control section 170 that controls these process units (groups), for example. As an example, the APC 160 may set a target value that is a target for controlling the process units (groups), based on at least one of the schedule information generated by the scheduler, a logical unit grouping process simulation of 2-3 units, or the simulation results for each on-site process unit (group) output by the process simulating section 150. The APC 160 then controls the process variation in these process units (groups) by using feedback control or feedforward control in accordance with the target value to perform advanced control of the on-site process control section 170. The APC 160 does not need to be provided for processes that do not justify advanced control.

The BPC 165 is implemented for each process unit (group) that is related to blend property control and located off-site, and performs blend property control for each of these process units (groups) at a higher level than the off-site process control section 175 that controls these process units (groups), for example. As an example, the BPC 165 may perform higher level control of the off-site process control section 175 controlling the process units (groups) related to blend property control, based on at least one of the schedule information generated by the scheduler, the site-wide simulation results output by the site-wide simulating section 140, or the simulation results for each process unit (group) related to blend property control output by the blending simulating section 155.

The on-site process control section 170 is implemented for each on-site process unit (group), and is a process control system that automatically manages the operations and processes of these process units (groups), using a computer, for example. The process control system referred to here includes a DCS (Distributed Control System), SCADA (Supervisory Control and Data Acquisition), a digital control system, a production information control system, process IT, a technical IT system, or the like. As an example, the on-site process control section 170 may control the on-site process units (groups) based on at least one of the schedule information generated by the scheduler, the site-wide simulation results output by the site-wide simulating section 140, the simulation results of each on-site process unit (group) output by the process simulating section 150, or the control information from the APC 160.

The off-site process control section 175 may be a system similar to the on-site process control section 170, for example. The off-site process control section 175 is implemented for each off-site process unit (group), and is a process control system that automatically manages the operations and processes of these process units (groups), using a computer. As an example, the off-site process control section 175 may control the off-site process units (groups) based on at least one of the schedule information generated by the scheduler, the site-wide simulation results output by the site-wide simulating section 140, the simulation results of each process unit (group) relating to blend property control output by the blending simulating section 155, or the control information from the BPC 165.

The petrochemical sites 120C produce a plurality of chemical products such as synthetic fiber, synthetic resin, and synthetic rubber, by causing a chemical reaction with raw material. The petrochemical sites 120C are similar to the refineries 120R, aside from not including the blending simulating sections 155 and the BPCs 165, and therefore further description is omitted.

In the total solution model 100, there is only one system and only one set of a work process and a model, and all of these are integrated by the flow and transfer of data or information. Accordingly, such a total solution model 100 ensures that the data is accurately and efficiently processed among different groups in an organization. Therefore, as an example, it is possible to realize a large-scale system in which information is linked between a main branch of a company and a refinery, and between multiple refineries, and in which work processes are streamlined and manual work is eliminated.

Fig. 2 shows an example of an oil refinement flow at a refinery 120R. At the refinery 120R, crude oil, which is a mixture of hydrocarbons with a wide boiling range, is refined to produce a plurality of petroleum products. Generally, at a refinery 120R, crude oil is distilled in a CDU (Crude Distillation Unit), and separated into fractions with different boiling ranges, i.e. a gas fraction, naphtha fraction, kerosene fraction, light diesel oil fraction, heavy diesel oil fraction and residue fraction, according to a cutoff temperature. LP gas is produced from the gas fraction. The naphtha fraction is hydro-desulfurized by a naphtha hydrotreating unit and then catalytically reformed by a catalytic reforming unit (CRU), and benzene is separated therefrom by a benzene extraction unit to produce gasoline, naphtha, aromatics, and the like. The kerosene fraction is hydro-desulfurized in a kerosene hydrotreating unit to produce kerosene. The light diesel oil fraction is desulfurized in a diesel desulfurization unit to produce light oil. The heavy diesel oil fraction is hydro-desulfurized by a heavy oil direct desulfurization unit to produce heavy oil. Also, the heavy diesel oil fraction is separated into light and heavy fractions in a vacuum distillation unit (VDU). The light fraction separated by VDU is hydro-desulfurized in a heavy oil indirect desulfurization unit, then catalytically cracked in a fluid catalytic cracking (FCC) unit and hydro-desulfurized by an FCC gasoline desulfurization unit, to produce gasoline. Alternatively the light fraction separated by VDU is processed in a hydrocracker unit (HCU). On the other hand, the heavy fraction separated by VDU is pyrolyzed in a thermal cracking unit (Coker) to produce coke, and is also processed in an asphalt production unit to produce asphalt.

In the petrochemical industry, naphtha is the main feedstock and olefins e.g. ethylene, propylene and aromatics, e.g. benzene, toluene, aromatic hydrocarbons of xylene (overall so-called BTX) are the main materials obtained.

In the total solution model 100, the on-site process units may include the units described above in the refinery 120R, for example, and the on-site process control section 170 may control the operations and processes of these units. Furthermore, the APC 160 may be implemented for each unit that is particularly important for the operation of the refinery 120R, such as the CDU, VDU, FCC, and CRU, among the units described above, for example.

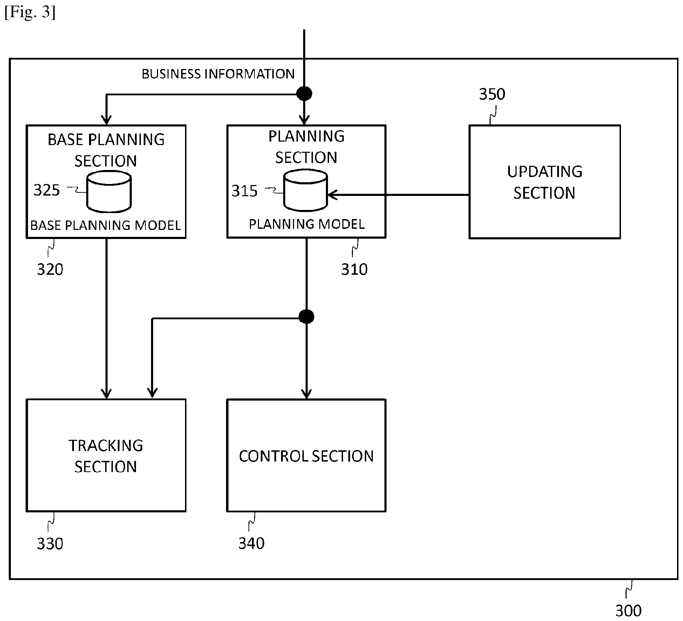

Fig. 3 shows an example of a block diagram of a system 300 according to the present embodiment. The system 300 may realize a portion of the functions of the total solution model 100 shown in Fig. 1, for example. The system 300 according to the present embodiment tracks the degree of improvement in a production plan generated using a planning model that has been updated to a newest state, with the production plan generated using an unupdated planning model as a base.

The system 300 may be a computer such as a PC (personal computer), tablet computer, smartphone, work station, server computer, or general user computer, or may be a computer system in which a plurality of computers are connected. Such a computer system is also a computer, in a broad sense. The system 300 may be implemented in a virtual computer environment that can be executed in one or more computers. Instead, the system 300 may be a specialized computer designed for the purpose of operation of the production site, or may be specialized hardware realized by specialized circuitry. If the system 300 is capable of connecting to the Internet, the system 300 may be realized by cloud computing.

The system 300 according to the present embodiment includes a planning section 310, a base planning section 320, tracking section 330, a control section 340, and an updating section 350. Each block in the present drawing indicates a function block, and does not necessarily correspond to an actual device configuration or apparatus configuration. In other words, in the present drawing, just because function blocks are drawn as separate blocks, this does not limit the configuration to using separate devices or apparatuses for these functions. Furthermore, in the present drawing, just because a function block is shown by a single block, this does not limit the configuration to using a single device or apparatus for this function.

The planning section 310 includes a planning model 315. The planning model 315 is updated to the newest state, i.e. to be up-to-date. The planning section 310 generates a production plan for controlling the production site 120 during a target interval, using the planning model 315 that has been updated to the newest state in this manner. Here, the planning model 315 may be a linear programming model that uses matrix mathematics. In other words, the planning model 315 derives a combination of variable values that maximize (or minimize) an objective function of Math. 2, based on the constraint conditions shown in Math. 1 above, by repeatedly testing combinations of different numerical values using matrix mathematics. As an example, the planning section 310 may be at least one of the multi-site planning section 110 or the site planning section 130 in the total solution model 100. The planning section 310 acquires the business information via a network, various memory devices, user input, or the like, and generates the production plan using the acquired business information. The planning section 310 may supply the generated production plan and the schedule information that is in accordance with the generated production plan to another function section or apparatus, via a network, various memory devices, user input, or the like.

The base planning section 320 includes a base planning model 325. The base planning model 325 is a planning model with at least a state differing from that of the up-to-date planning model 315. As an example, the base planning model 325 may be a planning model that is the same as the planning model 315 before the update is reflected therein. The base planning section 320 generates a base plan to serve as the base for the production plan, using the base planning model 325 that is the unupdated planning model and differs from the planning model 315 that has been updated to the newest state. The base planning section 320 acquires the business information via a network, various memory devices, user input, or the like, and generates the base plan using the acquired business information. The base planning section 320 may supply the generated base plan to another function section or apparatus via a network, various memory devices, user input, or the like.

The tracking section 330 acquires the production plan from the planning section 310. Furthermore, the tracking section 330 acquires the base plan from the base planning section 320. The tracking section 330 then tracks improvements in the production plan caused by the updating of the planning model, based on the production plan acquired from the planning section 310 and the base plan acquired from the base planning section 320. The tracking section 330 may supply the information indicating improvement tracked in the production plan to another function section or apparatus via a network, various memory devices, user input, or the like.

The control section 340 acquires the schedule information from the planning section 310. The control section 340 controls the production site 120 in accordance with the schedule information corresponding to the production plan, i.e. based on the production plan. As described above, the production site 120 that is the control target may include a refinery that produces a plurality of petroleum products by refining crude oil.

The updating section 350 acquires the information needed to update the planning model 315 to the newest state, via a network, various memory devices, user input, or the like, and updates the planning model 315.

The following uses a flow to describe the details of a case where the improvement in the production plan is tracked by these function sections.

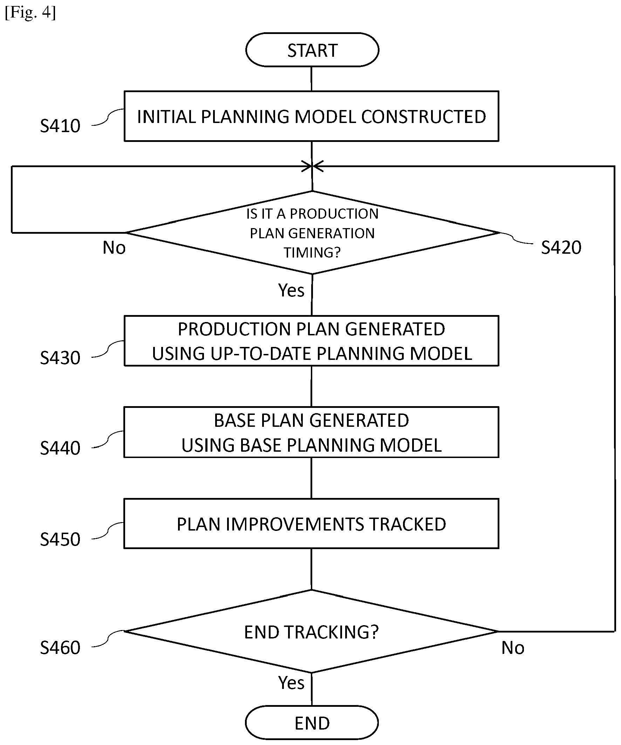

Fig. 4 shows an example of a flow by which the system 300 according to the present embodiment tracks improvement in the production plan.

At step 410, the system 300 constructs the initial planning model 315. As an example, the planning section 310 copies the base planning model 325 of the base planning section 320 to serve as the initial planning model 315 that is up-to-date.

At step 420, the system 300 judges whether it is currently a timing for generating the production plan. For example, the system 300 judges whether it is currently a production plan generation timing that comes every predetermined period, i.e. every month. At step 420, if it is judged to not currently be the timing for generating the production plan, the system 300 repeats the process of step 420.

At step 420, if it is judged to currently be the timing for generating the production plan, the system 300, at step 430, generates the production plan using the up-to-date planning model 315. In other words, the planning section 310 generates the production plan for controlling the production site 120 during the target interval (e.g. a 1-month period starting now) using the planning model 315 that has been updated to the newest state. Here, the planning model 315 may be a linear programming model, for example.

The planning section 310 acquires business information including information such as crude oil quantity, crude oil type, crude oil price, product price, product demand, process unit availability, process unit maximum capacity, and the like via a network, various memory devices, user input, or the like, and inputs this business information to the planning model 315. Next, the planning model 315 derives a combination of variable values that maximize the "gross profit", using the linear programming technique described above. In this case, the planning section 310 then generates the production plan including information such as oil balance, economic balance, gross profit, operating cost or net profit, energy balance, a process unit summary, a marginal value, a blend summary, and reports concerning any of the above. The planning section 310 then supplies the tracking section 330 with the generated production plan. Furthermore, the planning section 310 supplies the control section 340 with the schedule information corresponding to the generated production plan.

At step 440, the system 300 generates the base plan, using the base planning model 325. In other words, the base planning section 320 generates the base plan to serve as the base for the production plan, using the base planning model 325 that is the unupdated planning model.

Here, at step 430 and step 440, the planning section 310 and the base planning section 320 may each input the same information to the respective planning models, to respectively generate the production plan and the base plan. As a more specific example, in order to generate the production plan for the target interval at step 430, the base planning section 320 inputs information, which is the same as the information input into the up-to-date planning model 315 by the planning section 310, into the base planning model 325 that is the unupdated planning model. In this way, the system 300 can track improvements in the production plan caused only by this update of the planning model, without depending on the input to the model. Next, as an example, the base planning model 325 generates the base plan to serve as the base of the production plan for controlling the production site 120 during the target interval, using the same method as used for the planning model 315. The base planning section 320 then supplies the tracking section 330 with the generated base plan.

The above describes an example of a case in which the production plan is generated using the up-to-date planning model 315 and then the base plan is generated using the base planning model 325, but instead, the production plan may be generated after generating the base plan. In other words, either of step 430 and step 440 may be performed before the other.

At step 450, the tracking section 330 tracks the improvement in the production plan caused by the update of the planning model, based on the production plan generated by the planning section 310 at step 430 and the base plan generated by the base planning section 320 at step 440.

At this time, the tracking section 330 may track the improvements in the production plan caused by the update of the planning model, based on the difference between the production plan and the base plan, for example. In other words, the tracking section 330 may record a value obtained by subtracting the base plan from the production plan, as the improvement in the production plan caused by the update of the planning model 315. In this way, the tracking section 330 can track the improvement in the production plan by using a simple calculation.

Furthermore, the tracking section 330 may track the profit in the production plan. In other words, the tracking section 330 may record improvement in the "profit" in the production plan and the base plan, as the improvement in the production plan caused by the update of the planning model 315. In this way, the tracking section 330 can track an indicator that is particularly important for business.

Accordingly, the tracking section 330 may record a value obtained by subtracting the value of the "profit" in the base plan from the value of the "profit" in the production plan, for example, as the improvement in the production plan caused by the update of the planning model 315.

At step 460, the system 300 judges whether to end the tracking of the improvement in the production plan. At step 460, if it is judged that the tracking is not to be ended, the system 300 returns the process to step 420 and repeats the processes from step 420 to step 460. On the other hand, at step 460, if it is judged that the tracking is to be ended, the system 300 ends the process.

The tracking section 330 can track the improvement in the production plan by repeating such processes and continuing to record the improvement in the production plan at every production plan generation timing (e.g. every month). In other words, the system 300 can understand how much, and at which timing, the production plan has improved due to the updates of the planning model 315, for example. The tracking section 330 can supply the information indicating the improvement in the production plan obtained in this manner to another function section or apparatus, via a network, various memory devices, user input, or the like. Further, the system can perform various controls based on the information indicating the improvement in the production plan. As an example, the system 300 may supply the information indicating the improvement in the production plan to other production sites and apply the same improvement to the other production sites. The system 300 may limit the update of the planning model 315 so that the content that has already been improved is not changed in the subsequent update of the planning model 315.

Furthermore, the tracking section 330 may acquire information concerning the update of the planning model 315. For example, when the planning model 315 has been updated, the tracking section 330 may acquire information indicating the update content and the update timing of the planning model 315. The tracking section 330 may then create a correspondence relationship between the update of the planning model 315 and the improvement in the production plan, by recording the improvement in the production plan being tracked and the update of the planning model 315 in association with each other.

As an example, the tracking section 330 records updates of the planning model 315 and improvements in the production plan as shown in Table 1.

[Table 1]

| | Y/M/D | PRODUCTION PLAN | BASE PLAN | IMPROVEMENT |
|---|---|---|---|---|
| | | | | |
| | 2019/06/01 | 3.40$/bbl | 3.20$/bbl | +0.20$/bbl |
| 2019/06/13 UPDATE X → | | | | |
| | 2019/07/01 | 3.61$/bbl | 3.39$/bbl | +0.22$/bbl |
| 2019/07/05 UPDATE Y → 2019/07/27 UPDATE Z → | | | | |
| | 2019/08/01 | 3.57$/bbl | 3.23$/bbl | +0.27$/bbl |
| | | | | |

Specifically, the tracking section 330 assumes that, for the date of June 1st, a production plan indicating a profit of 3.40 $/bbl, i.e. 3.40 dollars per barrel and a base plan indicating a profit of 3.20 $/bbl have been generated. In this situation, the tracking section 330 judges that an improvement of +0.20 $/bbl is realized by the production plan compared to the base plan, by subtracting 3.20 $/bbl from 3.40 $/bbl. In the same manner, the tracking section 330 judges that an improvement of +0.22 $/bbl is realized by the production plan compared to the base plan on the date of July 1st and judges that an improvement of +0.27 $/bbl is realized by the production plan compared to the base plan on the date of August 1st.

Furthermore, it is assumed that the planning model 315 is updated with the content "X" on June 13th, for example. Similarly, it is assumed that the planning model 315 is updated with the content "Y" on July 5th and is updated with the content "Z" on July 27 th.

In this case, the tracking section 330 judges that an improvement of +0.02 $/bbl, obtained by subtracting the improvement of +0.20 $/bbl on the date of June 1st from the improvement of +0.22 $/bbl on the date of July 1st, is the improvement caused by the update of the planning model 315 performed from June 1st to July 1st, i.e. the improvement caused by the update having the content "X". Similarly, the tracking section 330 judges that an improvement of +0.05 $/bbl, obtained by subtracting the improvement on the date of July 1st from the improvement on the date of August 1st, is the improvement caused by the update of the planning model 315 performed from July 1st to August 1st, i.e. the improvement caused by the updates having the content "Y" and "Z".

In this way, the tracking section 330 can create a correspondence relationship between the update of the planning model 315 and the improvement of the production plan, based on the difference in the improvement among a plurality of timing and the updates of the planning model 315 occurring between these plurality of timings. Therefore, the tracking section 330 can judge, for each piece of update content, the degree to which the production plan has been improved by the update of the planning model 315.

Conventionally, when performing worldwide operation of a large-scale production site, it is unclear what effect will actually be achieved by updating of the planning model for generating the production plan of the production site 120. In contrast to this, according to the system 300 of the present embodiment, the degree to which the production plan, which is generated using the planning model that has being updated to the newest state with the production plan generated using the unupdated planning model as a base, is tracked. Therefore, by updating the planning model, the system 300 can understand the degree to which the production plan is improved, and can objectively show the merits of updating and accurately maintaining the planning model. That is, the system 300 can provide a rigorous method for tracking of the value of continuous production site improvement.

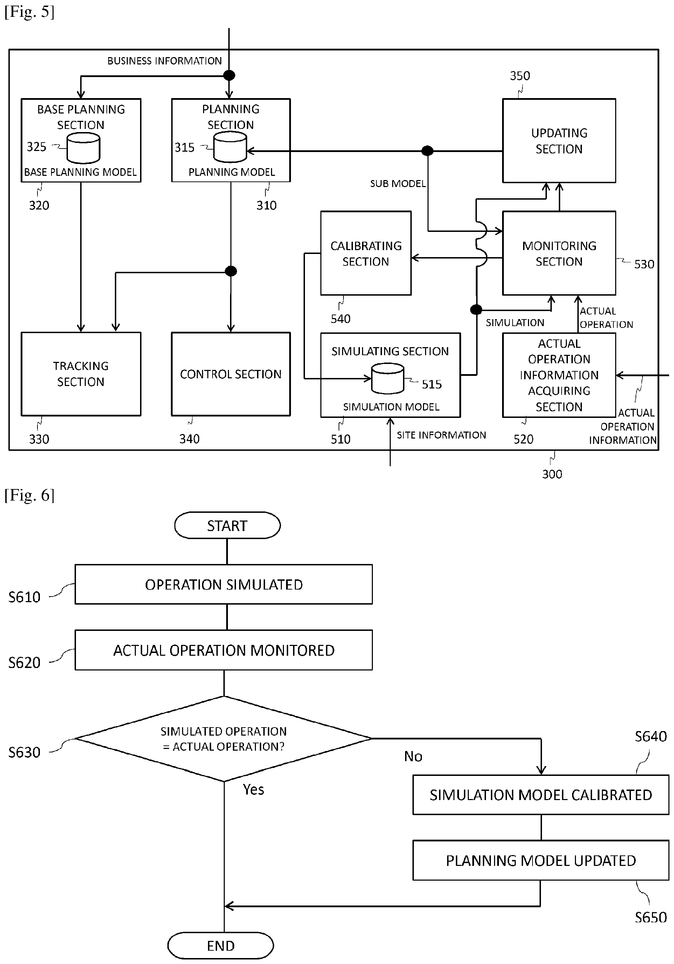

Fig. 5 shows an example of a block diagram of the system 300 according to a modification of the present embodiment. In Fig. 5, components that have the same function and configuration as in Fig. 3 are given the same reference numerals, and the descriptions include only differing points. The system 300 according to the present modification further includes a simulating section 510, an actual operation information acquiring section 520, a monitoring section 530, and a calibrating section 540.

The simulating section 510 includes a simulation model 515 of at least a portion of the production site 120, and simulates the operation of the at least a portion of the production site 120 based on this simulation model 515. Here, the at least a portion of the production site 120 may be a process unit at the production site 120, for example. Accordingly, the simulation model 515 may be a process unit simulation model. The simulating section 510 may be the process simulating section 150 or the blending simulating section 155 in the total solution model 100, for example. The simulating section 510 acquires site information concerning the production site 120, via a network, various memory devices, user input, or the like. The simulating section 510 simulates the operation of at least a portion of the production site 120 using the acquired site information and outputs the simulation results for the at least a portion of the production site 120, for example. The simulating section 510 supplies the output simulation results to the monitoring section 530 and the updating section 350. Furthermore, when the simulation model 515 is updated, the simulating section 510 supplies updated parameter information to the updating section 350. The simulating section 510 may supply the output simulation results and updated parameter information to another function section or apparatus, via a network, various memory devices, user input, or the like.

The actual operation information acquiring section 520 acquires actual operation information, i.e. actual results, obtained when the production site 120 actually operates, via a network, various memory devices, user input, or the like. The actual operation information acquiring section 520 supplies the acquired actual operation information to the monitoring section 530.

The monitoring section 530 monitors the actual operation of at least a portion of the production site 120, using the actual operation information supplied from the actual operation information acquiring section 520. When it is determined that calibration of the simulation model 515 is necessary, the monitoring section 530 instructs the calibrating section 540 to calibrate the simulation model 515. Furthermore, when it is judged that an update of the planning model 315 is necessary, the monitoring section 530 instructs the updating section 350 to update the planning model 315.

The calibrating section 540 calibrates the simulation model 515 based on the difference between the operation simulated by the simulating section 510 and the actual operation monitored by the monitoring section 530.

The updating section 350 updates the planning model 315 according to the calibration of the simulation model 515. Furthermore, the updating section 350 supplies the monitoring section 530 with sub models corresponding to the updated planning model 315. Here, the sub models may be models corresponding to each process unit, for example. Each sub model may include a linear programming table that is the same as a subset of each process unit in the updated planning model 315.

The following uses a flow to describe the details of a case in which the planning model 315 is updated by these function sections.

Fig. 6 shows an example of a flow by which the system 300 according to this modification of the present embodiment updates the planning model 315.

At step 610, the simulating section 510 simulates the operation of at least a portion of the production site 120 (e.g. a process unit at the production site 120) based on the simulation model 515 of at least a portion of the production site 120. Here, the simulation model 515 may be a steady state model.

The simulating section 510 acquires the site information including information such as supply flow, product flow, temperature, pressure, and lab data concerning supply quality and product quality at the production site 120 obtained from mini tests or the like performed on the process units at the production site 120 during a period of several hours at monthly or bi-monthly intervals when full lab data is available, via a network, various memory devices, user input, or the like, and inputs this site information to the simulation model 515 that is a steady state model. Next, as an example, the simulation model 515 simulates the behavior of reactions corresponding to the input, output, and processing content in at least a portion of the production site 120 in a case where the production site 120 operates according to the schedule information generated by the planning section 310. The simulating section 510 then outputs the simulation results including information such as the production quantity, property, site conditions, and performance of at least a portion of the production site 120 occurring in this case. The simulating section 510 supplies the monitoring section 530 with the simulation results obtained by simulating at least a portion of the production site 120.

Here, in the manner described above, the production site 120 may include a refinery 120R that produces a plurality of petroleum products by refining crude oil, for example. Accordingly, a portion of the production site 120 may include at least one of a crude distillation unit, vacuum distillation unit, naphtha hydrotreating unit, catalytic reforming unit, benzene extraction unit, kerosene hydrotreating unit, diesel desulfurization unit, heavy oil desulfurization unit (e.g. heavy oil indirect desulfurization unit and/or heavy oil direct desulfurization unit), fluid catalytic cracking unit, FCC gasoline desulfurization unit, thermal cracking unit, hydrocracker unit, or asphalt production unit in the refinery 120R. The simulating section 510 simulates the operation of at one on-site process unit, which may include these units described above, for example. At this time, the simulating section 510 may simulate the operation of one process unit at the production site 120, or may simulate the operation of a plurality of process units at the production site 120.

At step 620, the actual operation information acquiring section 520 acquires, via a network, actual results as the actual operation information obtained when the production site 120 actually operates. The actual operation information acquiring section 520 supplies the monitoring section 530 with the acquired actual operation information. The monitoring section 530 then monitors the actual operation of at least a portion of the production site 120, using the actual operation information supplied from the actual operation information acquiring section 520.

At step 630, the monitoring section 530 makes a comparison between the simulation results supplied from the simulating section 510 at step 610 and the actual operation information supplied from the actual operation information acquiring section 520 at step 620, and if the difference therebetween is less than or equal to a predetermined threshold value, judges that the simulated operation matches the actual operation and ends the process. On the other hand, if the comparison of step 630 indicates that this difference is greater than the predetermined threshold value, the monitoring section 530 judges that the simulated operation does not match the actual operation, judges that the simulation model 515 needs calibration, and instructs the calibrating section 540 to calibrate the simulation model 515. Furthermore, in response to the calibration of the simulation model 515, the monitoring section 530 judges that the planning model 315 needs to be updated, and instructs the updating section 350 to update the planning model 315.

When judging whether the simulated operation and the actual operation match, the monitoring section 530 may compare the simulation results and actual operation information to each other while focusing on any characteristic. For example, the monitoring section 530 may make the comparison while focusing on a prescribed characteristic such as the production amount or property, while focusing on another characteristic, or while focusing on a plurality of characteristics.

At step 640, the calibrating section 540 calibrates the simulation model 515 based on the difference between the simulated operation and the actual operation. For example, the calibrating section 540 updates an adjustable parameter in the model in a manner to minimize the difference between the simulated operation and the actual operation. In this way, when the difference between the simulated operation and the actual operation exceeds the predetermined threshold value, the calibrating section 540 may calibrate the simulation model 515. In this case, by making it possible for the user to set this threshold value, the trigger for the calibration of the simulation model 515 can be controlled.

At step 650, in response to the calibration of the simulation model 515 at step 640, the updating section 350 updates the planning model 315 and supplies the sub models corresponding to the updated planning model 315 to the monitoring section 530. The system 300 then ends this process. At this time, the updating section 350 may update at least one coefficient in a first-order expression used in the linear programming model. Here, the planning model 315 and the simulation model 515 may include common parameters, and the updating section 350 may update at least one coefficient corresponding to a common parameter. In the manner described above, the planning model 315 includes a linear programming table in which each entry is a coefficient corresponding to a respective one of a plurality of variables. Some of the coefficients of each entry include at least one coefficient corresponding to a parameter common to the planning model 315 and the simulation model 515. Therefore, as an example, the updating section 350 updates the planning model 315 by adjusting such a coefficient in the linear programming table. In this way, the updating section 350 can reflect the effect caused by the calibration of the simulation model 515 in step 640 in the planning model 315 as well.

Furthermore, when updating the planning model 315, the simulating section 510 inputs the update parameter for updating the planning model 315 into the simulation model 515 that has been calibrated at step 640 and simulates the operation of at least a portion of the production site 120, and the updating section 350 may update the planning model 315 based on the simulation results obtained using this update parameter. In other words, prior to actually updating the planning model 315, the updating section 350 may simulate the operation of at least a portion of the production site 120 in a case where the update parameter has been used, by using the calibrated simulation model 515 that was calibrated at step 640. In this way, the updating section 350 can judge the appropriateness of the update parameter in advance.

Conventionally, when performing worldwide operation of a large-scale production site 120, the enterprise resource planning and manufacturing execution have each been performed independently by using a system in which different groups (or departments) in the organization. In other words, as an example, the planning model 315 is independently updated by the ERP layer and the simulation model 515 is updated independently by the MES layer, and this update and calibration are not reflected in each other. Therefore, despite the planning model 315 and the simulation model 515 being used in the same organization, the planning model 315 and the simulation model 515 operate with different settings. In contrast to this, according to the system 300 of the modification of the present embodiment, the simulation model 515 is calibrated based on the actual operating situation and the planning model 315 is updated in response to the calibration of the simulation model 515, and therefore the effect caused by calibrating the simulation model 515 is reflected in the planning model 315. Therefore, it is possible to accurately maintain the simulation model 515 for simulating the operation of the production site 120 and the planning model 315 for generating the production plan of the production site 120. In other words, the system 300 according to the modification of the present embodiment makes it possible to continue accurately modeling the production site 120. Accordingly, the system 300 according to the modification of the present embodiment makes it possible to reliably and quickly work through the PDCA (Plan-Do-Check-Act) cycle of operation management at the production site 120, and to maximize cooperation among a plurality of departments. Furthermore, by using such a system 300, it is possible to maximize the objective function by optimizing the operations of a plurality of process units, for example. If the planning model 315 continues to be accurately maintained in this way, the affinity is increased with the system 300 according to the present embodiment that tracks the improvements, and it is possible to draw out the maximum effect of the system 300.

Various embodiments of the present invention may be described with reference to flowcharts and block diagrams whose blocks may represent (1) steps of processes in which manipulations are performed or (2) sections of apparatuses responsible for performing manipulations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical manipulations, flip-flops, registers, memory elements, etc., such as field-programmable gate arrays (FPGA), programmable logic arrays (PLA), etc.

Computer-readable media may include any tangible device that can store instructions for execution by a suitable device, such that the computer-readable medium having instructions stored therein comprises an article of manufacture including instructions which can be executed to create means for performing manipulations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU -RAY (RTM ) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, JAVA (registered trademark), C++, etc., and conventional procedural programming languages, such as the "C" programming language or similar programming languages.

Computer-readable instructions may be provided to a processor of a general purpose computer, special purpose computer, or other programmable data processing apparatus, or to programmable circuitry, locally or via a local area network (LAN), wide area network (WAN) such as the Internet, etc., to execute the computer-readable instructions to create means for performing manipulations specified in the flowcharts or block diagrams. Examples of processors include computer processors, processing units, microprocessors, digital signal processors, controllers, microcontrollers, etc.

FIG. 8 shows an example of a computer 2200 in which aspects of the present invention may be wholly or partly embodied. A program that is installed in the computer 2200 can cause the computer 2200 to function as or perform manipulations associated with apparatuses of the embodiments of the present invention or one or more sections thereof, and/or cause the computer 2200 to perform processes of the embodiments of the present invention or steps thereof. Such a program may be executed by the CPU 2212 to cause the computer 2200 to perform certain manipulations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, or the like to the input/output controller 2220.

A program is provided by computer readable media such as the DVD-ROM 2201 or the IC card. The program is read from the computer readable media, installed into the hard disk drive 2224, RAM 2214, or ROM 2230, which are also examples of computer readable media, and executed by the CPU 2212. The information processing described in these programs is read into the computer 2200, resulting in cooperation between a program and the above-mentioned various types of hardware resources. An apparatus or method may be constituted by realizing the manipulation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of manipulations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on or near the computer 2200. In addition, a recording medium such as a hard disk or a RAM provided in a server system connected to a dedicated communication network or the Internet can be used as the computer readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention, which is defined by the claims.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

**List of Reference Numerals**

100: total solution model
110: multi-site planning section
120: production site
120R: refinery
120C: petrochemical site
130: site planning section
140: site-wide simulating section
150: process simulating section
155: blending simulating section
160: APC
165: BPC
170: on-site process control section
175: off-site process control section
300: system
310: planning section
315: planning model
320: base planning section
325: base planning model
330: tracking section
340: control section
350: updating section
510: simulating section
515: simulation model
520: actual operation information acquiring section
530: monitoring section
540: calibrating section
2200: computer
2201: DVD-ROM
2210: host controller
2212: CPU
2214: RAM
2216: graphic controller
2218: display device
2220: input/output controller
2222: communication interface
2224: hard disk drive
2226: DVD-ROM drive
2230: ROM
2240: input/output chip
2242: keyboard

**Claims**

1. A system comprising:

   a planning section (310) configured to generate a production plan for controlling a production site during a target interval, using a planning model that has been updated to a newest state;
   a base planning section (320) configured to generate a base plan to serve as a base of the production plan, using an unupdated planning model; and
   a tracking section (330) configured to acquire the production plan generated by the planning section (310) and the base plan generated by the base planning section (320), and to track improvement in the production plan caused by the update of the planning model, based on the production plan and the base plan.

2. The system according to Claim 1, wherein
the planning section (310) and the base planning section (320) are respectively configured to generate the production plan and the base plan by each inputting the same information to the respective planning models.

3. The system according to Claim 2, wherein
the base planning section (320) is configured to input, to the unupdated planning model, information that is the same as information input to the planning model by the planning section (310) for generating the production plan for the target interval.

4. The system according to any one of Claims 1 to 3, wherein
the tracking section (330) is configured to track the improvement in the production plan caused by the update of the planning model, based on a difference between the production plan and the base plan.

5. The system according to any one of Claims 1 to 4, wherein
the tracking section (330) is configured to track profit in the production plan.

6. The system according to any one of Claims 1 to 5, further comprising:
an updating section (350) configured to update the planning model.

7. The system according to Claim 6, further comprising:

a simulating section (510) configured to simulate operation of at least a portion of the production site, based on a simulation model of the at least a portion of the production site; and
a calibrating section (540) configured to calibrate the simulation model, based on a difference between the simulated operation and actual operation, wherein
the updating section (350) configured to update the planning model according to the calibration of the simulation model.

8. The system according to any one of Claims 1 to 7, wherein
the planning model is a linear programming model.

9. The system according to any one of Claims 1 to 8, further comprising:
a control section (340) configured to control the production site, based on the production plan.

10. The system according to any one of Claims 1 to 9, wherein
the production site includes a refinery configured to produce a plurality of petroleum products by refining crude oil.

11. A method comprising:

generating a production plan for controlling a production site during a target interval, using a planning model that has been updated to a newest state;
generating a base plan to serve as a base of the production plan, using an unupdated planning model; and
acquiring the generated production plan and the generated base plan, and tracking improvement in the production plan caused by the update of the planning model, based on the production plan and the base plan.

12. A program that, when executed by a computer, causes the computer to function as:

a planning section (310) that generates a production plan for controlling a production site during a target interval, using a planning model that has been updated to a newest state;
a base planning section (320) that generates a base plan to serve as a base of the production plan, using an unupdated planning model; and
a tracking section (330) that acquires the production plan generated by the planning section (310) and the base plan generated by the base planning section (320), and tracks improvement in the production plan caused by the update of the planning model, based on the production plan and the base plan.

13. A computer readable medium storing the program according to claim 12.

**Patentansprüche**

1. System, umfassend:

   einen Planungsabschnitt (310), der konfiguriert ist, um einen Produktionsplan zur Steuerung einer Produktionsstätte während eines Zielintervalls unter Verwendung eines Planungsmodells zu erzeugen, das auf einen neuesten Stand aktualisiert wurde;
   einen Basisplanungsabschnitt (320), der konfiguriert ist, um einen Basisplan zu erzeugen, der als Grundlage für den Produktionsplan dient, wobei ein nicht aktualisiertes Planungsmodell verwendet wird; und
   einen Verfolgungsabschnitt (330), der konfiguriert ist, um den von dem Planungsabschnitt (310) erzeugten Produktionsplan und den von dem Basisplanungsabschnitt (320) erzeugten Basisplan zu erfassen und die durch die Aktualisierung des Planungsmodells verursachte Verbesserung des Produktionsplans auf der Grundlage des Produktionsplans und des Basisplans zu verfolgen.

2. System nach Anspruch 1, wobei
   der Planungsabschnitt (310) und der Basisplanungsabschnitt (320) jeweils konfiguriert sind, um den Produktionsplan und den Basisplan zu erzeugen, indem sie jeweils die gleichen Informationen in die jeweiligen Planungsmodelle eingeben.

3. System nach Anspruch 2, wobei
   der Basisplanungsabschnitt (320) konfiguriert ist, um in das nicht aktualisierte Planungsmodell Informationen einzugeben, die dieselben sind wie die Informationen, die in das Planungsmodell durch den Planungsabschnitt (310) zum Erzeugen des Produktionsplans für das Zielintervall eingegeben wurden.

4. System nach einem der Ansprüche 1 bis 3, wobei
   der Verfolgungsabschnitt (330) konfiguriert ist, um die Verbesserung des Produktionsplans, die durch die Aktualisierung des Planungsmodells verursacht wird, auf der Grundlage einer Differenz zwischen dem Produktionsplan und dem Basisplan zu verfolgen.

5. System nach einem der Ansprüche 1 bis 4, wobei
   der Verfolgungsabschnitt (330) ist konfiguriert, um den Gewinn im Produktionsplan zu verfolgen.

6. System nach einem der Ansprüche 1 bis 5, weiter umfassend:
   einen Aktualisierungsabschnitt (350), der zum Aktualisieren des Planungsmodells konfiguriert ist.

7. System nach Anspruch 6, weiter umfassend:

   einen Simulationsabschnitt (510), der konfiguriert ist, um den Betrieb von mindestens einem Teil der Produktionsstätte auf der Grundlage eines Simulationsmodells des mindestens eines Teils der Produktionsstätte zu simulieren; und
   einen Kalibrierungsabschnitt (540), der konfiguriert ist, um das Simulationsmodell auf der Grundlage einer Differenz zwischen dem simulierten Betrieb und dem tatsächlichen Betrieb zu kalibrieren, wobei
   der Aktualisierungsabschnitt (350), der konfiguriert ist, um das Planungsmodell entsprechend der Kalibrierung des Simulationsmodells zu aktualisieren.

8. System nach einem der Ansprüche 1 bis 7, wobei
   das Planungsmodell ein lineares Programmierungsmodell ist.

9. System nach einem der Ansprüche 1 bis 8, weiter umfassend:
   einen Steuerabschnitt (340), der konfiguriert ist, um die Produktionsstätte auf der Grundlage des Produktionsplans zu steuern.

10. System nach einem der Ansprüche 1 bis 9, wobei
    die Produktionsstätte eine Raffinerie umfasst, die konfiguriert ist, um eine Vielzahl von Erdölprodukten zum Erzeugen von Rohöl zu raffinieren.

11. Verfahren, umfassend:

Erzeugen eines Produktionsplans zur Steuerung einer Produktionsstätte während eines Zielintervalls unter Verwendung eines Planungsmodells, das auf einen neuesten Stand gebracht wurde;
Erzeugen eines Basisplans, der als Grundlage für den Produktionsplan dient, unter Verwendung eines nicht aktualisierten Planungsmodells; und
Erfassen des erzeugten Produktionsplans und des erzeugten Basisplans und
Verfolgen der Verbesserung des Produktionsplans, die durch die Aktualisierung des Planungsmodells verursacht wurde, auf der Grundlage des Produktionsplans und des Basisplans.

12. Programm, das, wenn es von einem Computer ausgeführt wird, den Computer zu einer bestimmten Funktion veranlasst:

einen Planungsabschnitt (310), der einen Produktionsplan zur Steuerung einer Produktionsstätte während eines Zielintervalls unter Verwendung eines Planungsmodells erzeugt, das auf einen neuesten Stand aktualisiert wurde;
einen Basisplanungsabschnitt (320), der einen Basisplan erzeugt, der als Grundlage für den Produktionsplan dient, wobei ein nicht aktualisiertes Planungsmodell verwendet wird; und
einen Verfolgungsabschnitt (330), der den von dem Planungsabschnitt (310) erzeugten Produktionsplan und den von dem Basisplanungsabschnitt (320) erzeugten Basisplan erfasst und die durch die Aktualisierung des Planungsmodells verursachte Verbesserung des Produktionsplans auf der Grundlage des Produktionsplans und des Basisplans verfolgt.

13. Computerlesbares Medium, das das Programm nach Anspruch 12 speichert.

## Revendications

1. Système comprenant :

une section de planification (310) configurée pour générer un plan de production pour commander un site de production pendant un intervalle cible, utilisant un modèle de planification qui a été mis à jour à un état le plus récent ;
une section de planification (320) de base configurée pour générer un plan de base pour servir de base du plan de production, utilisant un modèle de planification non mis à jour ; et
une section de suivi (330) configurée pour acquérir le plan de production généré par la section de planification (310) et le plan de base généré par la section de planification (320) de base, et pour suivre une amélioration dans le plan de production provoquée par la mise à jour du modèle de planification, sur la base du plan de production et du plan de base.

2. Système selon la revendication 1, dans lequel
la section de planification (310) et la section de planification (320) de base sont respectivement configurées pour générer le plan de production et le plan de base en entrant chacune les mêmes information dans les modèles de planification respectifs.

3. Système selon la revendication 2, dans lequel
la section de planification (320) de base est configurée pour entrer, dans le modèle de planification non mis à jour, des informations qui sont les mêmes que les informations entrées dans le modèle de planification par la section de planification (310) pour générer le plan de production pour l'intervalle cible.

4. Système selon l'une quelconque des revendications 1 à 3, dans lequel
la section de suivi (330) est configurée pour suivre l'amélioration dans le plan de production provoquée par la mise à jour du modèle de planification, sur la base d'une différence entre le plan de production et le plan de base.

5. Système selon l'une quelconque des revendications 1 à 4, dans lequel
la section de suivi (330) est configurée pour suivre le profit dans le plan de production.

6. Système selon l'une quelconque des revendications 1 à 5, comprenant en outre :
une section de mise à jour (350) configurée pour mettre à jour le modèle de planification.

**7.** Système selon la revendication 6, comprenant en outre :

une section de simulation (510) configurée pour simuler une opération d'au moins une portion du site de production, sur la base d'un modèle de simulation de l'au moins une portion du site de production ; et
une section d'étalonnage (540) configurée pour étalonner le modèle de simulation, sur la base d'une différence entre l'opération simulée et l'opération réelle, dans lequel
la section de mise à jour (350) configurée pour mettre à jour le modèle de planification selon l'étalonnage du modèle de simulation.

**8.** Système selon l'une quelconque des revendications 1 à 7, dans lequel
le modèle de planification est un modèle de programmation linéaire.

**9.** Système selon l'une quelconque des revendications 1 à 8, comprenant en outre :
une section de commande (340) configurée pour commander le site de production, sur la base du plan de production.

**10.** Système selon l'une quelconque des revendications 1 à 9, dans lequel
le site de production inclut une raffinerie configurée pour produire une pluralité de produits pétroliers par raffinage de pétrole brut.

**11.** Procédé comprenant :

la génération d'un plan de production pour commander un site de production pendant un intervalle cible, utilisant un modèle de planification qui a été mis à jour à un état le plus récent ;
la génération d'un plan de base pour servir de base du plan de production, utilisant un modèle de planification non mis à jour ; et
l'acquisition du plan de production généré et du plan de base généré, et le suivi d'une amélioration dans le plan de production provoquée par la mise à jour du modèle de planification, sur la base du plan de production et du plan de base.

**12.** Programme qui, lorsqu'il est mis en oeuvre par un ordinateur, amène l'ordinateur à fonctionner comme :

une section de planification (310) qui génère un plan de production pour commander un site de production pendant un intervalle cible, utilisant un modèle de planification qui a été mis à jour à un état le plus récent ;
une section de planification (320) de base qui génère un plan de base pour servir de base du plan de production, utilisant un modèle de planification non mis à jour ; et
une section de suivi (330) qui acquiert le plan de production généré par la section de planification (310) et le plan de base généré par la section de planification (320) de base, et suit une amélioration dans le plan de production provoquée par la mise à jour du modèle de planification, sur la base du plan de production et du plan de base.

**13.** Support lisible par ordinateur stockant le programme selon la revendication 12.

[Fig. 1]

MULTI-SITE PLANNING SECTION

110

REFINERY 120Ra
- SITE PLANNING SECTION — 130
- SITE-WIDE SIMULATING SECTION — 140
- PROCESS SIMULATING SECTION — 150
- BLENDING SIMULATING SECTION — 155
- APC — 160
- BPC — 165
- ON-SITE PCS — 170
- OFF-SITE PCS — 175

REFINERY 120Rm

PETROCHEMICAL SITE 120Ca
- SITE PLANNING SECTION — 130
- SITE-WIDE SIMULATING SECTION — 140
- PROCESS SIMULATING SECTION — 150
- APC — 160
- ON-SITE PCS — 170
- OFF-SITE PCS — 175

PETROCHEMICAL SITE 120Cn

100

[Fig. 2]

CRUDE OIL → CRUDE DISTILLATION UNIT (CDU)

- 40~180 °C → NAPHTHA HYDROTREATING UNIT → CATALYTIC REFORMING UNIT (CRU) → BENZENE EXTRACTION UNIT
- 170~250 °C → KEROSENE HYDROTREATING UNIT
- 240~350 °C → DIESEL DESULFURIZATION UNIT
- 350°C~ → VACUUM DISTILLATION UNIT (VDU) → HEAVY OIL INDIRECT DESULFURIZATION UNIT → FLUID CATALYTIC CRACKING UNIT (FCC) → FCC GASOLINE DESULFURIZATION UNIT
- HEAVY OIL DIRECT DESULFURIZATION UNIT
- HYDRO CRACKER UNIT (HCU)
- THERMAL CRACKING UNIT (COKER)
- ASPHALT PRODUCTION UNIT

Outputs: LP GAS; GASOLINE, NAPHTHA, AROMATICS; KEROSENE; LIGHT OIL; HEAVY OIL; COKE; ASPHALT

120R

[Fig. 3]

[Fig. 4]

```
                         ┌─────────────┐
                         │    START    │
                         └─────────────┘
                                │
        S410  ┌──────────────────────────────────────────┐
              │   INITIAL PLANNING MODEL CONSTRUCTED      │
              └──────────────────────────────────────────┘
                                │
                                │
                         ◇ IS IT A PRODUCTION ◇
              No         │  PLAN GENERATION   │      S420
                         ◇      TIMING?       ◇
                              │ Yes
              ┌──────────────────────────────────────────┐
        S430  │      PRODUCTION PLAN GENERATED            │
              │   USING UP-TO-DATE PLANNING MODEL         │
              └──────────────────────────────────────────┘
                                │
              ┌──────────────────────────────────────────┐
        S440  │        BASE PLAN GENERATED               │
              │     USING BASE PLANNING MODEL            │
              └──────────────────────────────────────────┘
                                │
              ┌──────────────────────────────────────────┐
        S450  │       PLAN IMPROVEMENTS TRACKED          │
              └──────────────────────────────────────────┘
                                │
        S460             ◇ END TRACKING? ◇          No
                              │ Yes
                         ┌─────────────┐
                         │     END     │
                         └─────────────┘
```

[Fig. 5]

[Fig. 6]

[Fig. 7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019041813 A1

- JP 2007018284 A

### Non-patent literature cited in the description

- Petroleum Refining Technology and Petroleum Supply and Demand Trends - Current Status and Future Prospects. **YOKOMIZO.** Petroleum, Natural Gas Resources Information. Japan Petroleum Institute for Natural Gas and Metals, 20 September 2017, vol. 51, 1-20